# EUROPÄISCHE PATENTSCHRIFT

(11) **EP 2 514 616 B1**
(45) Veröffentlichungstag und Bekanntmachung des Hinweises auf die Patenterteilung: **02.10.2013**
(21) Anmeldenummer: 12002465.8
(22) Anmeldetag: 05.04.2012
(51) Int. Cl.: B60G 7/00, B60G 3/18, B60G 11/18, B60G 21/055

(54) **Radaufhängung für eine Achse eines Kraftfahrzeuges**
Wheel suspension for an axle of a motor vehicle
Suspension de roue pour un axe d'un véhicule automobile

(30) Priorität: 20.04.2011 DE 102011018276
(43) Veröffentlichungstag der Anmeldung: 24.10.2012
(73) Patentinhaber: Audi AG, 85045 Ingolstadt (DE)
(72) Erfinder: Schmidt, Walter, 86643 Rennertshofen (DE)

(56) Entgegenhaltungen:
- EP-A1- 0 097 540
- DE-A1- 1 430 848
- DE-A1- 2 145 498
- FR-A1- 2 318 755
- JP-A- 1 190 515
- US-A- 2 998 241
- US-A- 3 158 365
- US-A- 3 181 885

## Beschreibung

Die vorliegende Erfindung betrifft eine Radaufhängung für eine Achse eines Kraftfahrzeuges gemäß dem Oberbegriff des Patentanspruchs 1.

Radaufhängungen der gattungsgemäßen Art sind zum Beispiel aus der US 3 181 885 A1, der DE 2145498 A1, der DE 1190809 A1 oder der DE 19807128 bekannt. Sie ermöglichen insbesondere eine konstruktiv einfachere Radaufhängung, bei der die Streben des Querstabilisators zugleich als untere Lenker für die Radführung dienen. Die Streben können dabei direkt mit dem Radträger oder in Radnähe an einem weiteren, etwa quer verlaufenden Lenker angelenkt sein. Die Tragfedern sind durch entsprechend angeordnete Schraubendruckfedern gebildet.

Allgemein ist es auch bekannt, insbesondere bei Hinterachsen von Kraftfahrzeugen, quer jeweils etwa bis zur Fahrzeuglängsmitte verlaufende Drehstabfedern als Tragfedern einzusetzen.

Aufgabe der Erfindung ist es, eine Radaufhängung für eine Achse (Vorderachse oder Hinterachse) eines Kraftfahrzeuges vorzuschlagen, die baulich besonders kompakt ausgeführt ist und die Vorteile hinsichtlich des Gewichts, des Teileaufwandes und der Herstellkosten bietet.

Die Lösung dieser Aufgabe wird mit den kennzeichnenden Merkmalen des Patentanspruchs 1 erreicht. Vorteilhafte und besonders zweckmäßige Weiterbildungen der Erfindung geben die Unteransprüche an.

Erfindungsgemäß wird vorgeschlagen, dass die Streben des Querstabilisators zugleich mit je Aufhängungsseite einer koaxial zum Stabilisator-Mittelteil angeordneten Drehstabfeder kombiniert sind, die etwa in Fahrzeugmitte am Aufbau verdrehfest abgestützt ist. Gemäß diesem Vorschlag werden das Stabilisator-Mittelteil und die Drehstabfedern als Tragfedern zu einer koaxialen Baueinheit mit geringem Platzbedarf zusammengefasst, die beide an die Streben trieblich angekoppelt sind, wobei die Streben in an sich bekannter Weise zugleich als Lenker für die Radführung dienen. Separate Tragfedern und deren Anbindung an die Radaufhängung und Abstützung zum Aufbau können entfallen.

In vorteilhafter Weiterbildung der Erfindung können die Drehstabfedern durch Rohrfedern gebildet sein, die radial außerhalb des einstückigen Stabilisator-Mittelteils angeordnet und an die Streben angekoppelt sind. Die rohrförmigen Drehstabfedern weisen eine höhere Biegesteifigkeit auf, so dass die resultierenden Federkräfte über die außen positionierten Streben verbessert aufgenommen und in den Aufbau eingeleitet werden können.

Die Drehstabfedern können des Weiteren etwa in Fahrzeugmitte an einem gemeinsamen Federlager mit einer mittleren, am Aufbau befestigbaren Stützkonsole und beiderseitigen, büchsenförmigen Federaufnahmen abgestützt sein, wobei das Stabilisator-Mittelteil durch das Federlager hindurchgeführt ist. Damit wird eine bauliche einfache, montagegünstige Konstruktion mit einheitlicher Anbindung der Drehstabfedern am Aufbau des Kraftfahrzeuges geschaffen.

Bevorzugt kann ferner das Stabilisator-Mittelteil mit den Streben verdrehfest verbunden sein, wobei die Streben zum Mittelteil ragende Nabenabschnitte aufweisen, die über gummielastische Lagerbüchsen am Aufbau schwenkbar gelagert sind. Damit wird eine besonders robuste Lagerung der Streben zum Aufbau sichergestellt, die den im Fahrbetrieb auftretenden Feder- und Stabilisatorkräften in besonderem Maße Rechnung trägt.

Die Drehstabfedern können bevorzugt über Steckverzahnungen mit dem Federlager einerseits und mit außenliegenden, im Durchmesser vergrößerten Abschnitten des Stabililsator-Mittelteils andererseits drehfest verbunden sein, wodurch insbesondere eine einfache Einstellbarkeit und Montage der Drehstabfedern gegeben ist.

Dabei können die Steckverbindungen zwischen den Drehstabfedern und den korrespondierenden Abschnitten des Stabilisator-Mittelteils innerhalb der an den Streben angeordneten Nabenabschnitte bzw. deren Lagerung am Aufbau positioniert sein, wodurch die Federkräfte und -momente verwindungsfrei bzw. ohne nennenswerte Biegemomente über die Streben in den Aufbau des Kraftfahrzeuges einleitbar sind.

Des Weiteren wird vorgeschlagen, dass zumindest eine der Streben auf einen an die Steckverzahnung anschließenden Fortsatz des Stabilisator-Mittelteils aufgesteckt und mit diesem stoffschlüssig verbunden ist. Dies stellt eine fertigungstechnisch günstige, dauerfeste Kraftübertragung von der Strebe zum Stabilisator-Mittelteil und zur Drehstabfeder sicher; wenn beide Streben derart, zum Beispiel durch Schweißverbindungen, befestigt werden, bildet die gesamte Stabilisator-Feder-Anordnung mit den Streben eine kostengünstige Vormontageeinheit, die aber bei einem Defekt nicht ohne weiteres zerlegbar ist.

Die Streben können in besonders vorteilhafter Weiterbildung der Erfindung mit einem Querschnittsprofil ausgeführt sein, das eine hohe Biegesteifigkeit und eine geringere Verdrehsteifigkeit aufweist. Dabei können die Streben blattfederartig mit zur Lenkeranbindung in Radnähe hin abnehmender Querschnittfläche gestaltet sein. Dies ergibt eine gewichtsgünstige und kostengünstige Gestaltung der Streben, gegebenenfalls als Bauteil spezifisch gleicher Biegespannung und ermöglicht eine verzwängungsfreie Anlenkung der Streben an den Radführungselementen.

Schließlich können in einer bevorzugten, weiteren Ausgestaltung der Erfindung die mit den Streben zusammenwirkenden, unteren Lenker Einzellenker sein, an denen zudem die Teleskop-Stoßdämpfer der Radaufhängung angelenkt sind, während die oberen Lenker als Dreieckslenker ausgeführt sind, deren Anlenkung am Radträger mit der Anlenkung des unteren Einzellenkers jeweils eine Lenkachse bilden, wobei ferner an den Radträgern Lenkarme angeordnet sind, an denen außerhalb der Lenkachse ein spurführender Lenker angelenkt ist. Eine derartige Radaufhängung ermöglicht bei einer relativ einfachen, kostengünstigen Konstruktion eine fahrdynamisch vorteilhafte Abstimmung der Radführung mit gezielten, elastokinematischen Eigenschaften. Bei einer Vorderachse mit gelenkten Rädern des Kraftfahrzeuges können die spurführenden Lenker die Spurstangen einer Lenkeinrichtung des Kraftfahrzeuges sein.

Ein Ausführungsbeispiel der Erfindung ist im Folgenden mit weiteren Einzelheiten näher erläutert. Die beigefügte, schematische Zeichnung zeigt in:
- Fig. 1: in raumbildlicher Darstellung eine linksseitige Radaufhängung einer Vorderachse für Kraftfahrzeuge, mit einem Querstabilisator und koaxial zum Stabilisator-Mittelteil ausgerichteten Drehstabfedern, die auf gemeinsame, zugleich als Lenker dienende Streben wirken;
- Fig. 2: eine Draufsicht gemäß Pfeil X der Fig. 1 auf die Radaufhängung;
- Fig. 3: den Querstabilisator mit koaxialen Drehstabfedern und davon abgehenden Streben der Radaufhängung nach den Fig. 1 und 2 in Gesamtansicht; und
- Fig.4: einen senkrechten Längsschnitt durch die linke Hälfte des Querstabilisators mit mittlerem Federlager, Stablisator-Mittelteil, linker Drehstabfeder und Strebe sowie deren Lagerstelle am Aufbau des Kraftfahrzeuges.

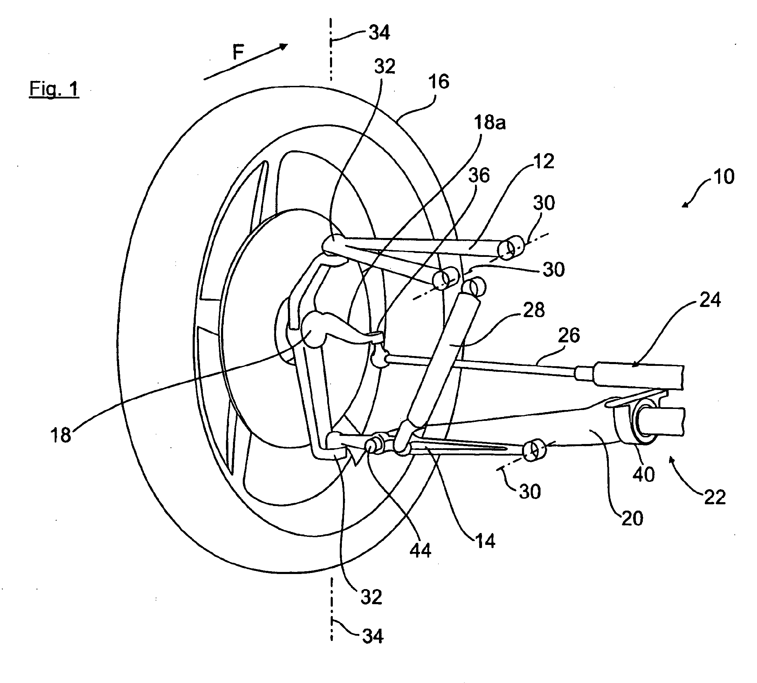

In der Fig. 1 ist eine linksseitige Radaufhängung 10 einer Vorderachse für Kraftfahrzeuge dargestellt, die sich im Wesentlichen aus einem oberen Dreieck-Querlenker 12, einem unteren, quer verlaufenden Einzellenker 14, einem ein Vorderrad 16 drehbar lagernden Radträger 18 und einer schräg in Fahrtrichtung F nach vorne innen ausgerichteten Strebe 20 als radführende Elemente zusammensetzt.

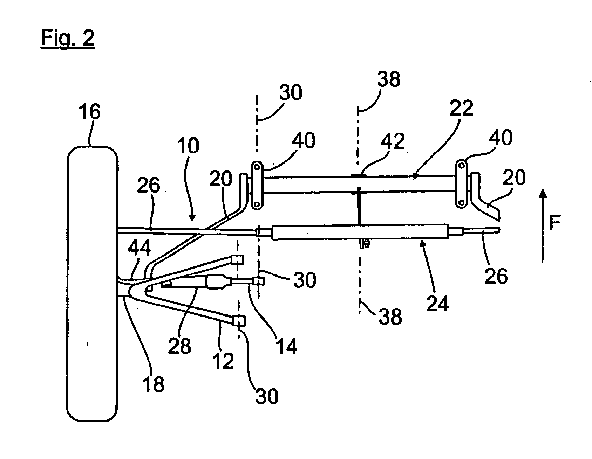

Die Strebe 20 ist Funktionsteil einer noch zu beschreibenden Stabilisator-Tragfeder-Baueinheit 22, die gemäß der Fig. 2 vor den besagten Lenkern 12, 14 am Aufbau (nicht dargestellt) des Kraftfahrzeuges in Querausrichtung angeordnet ist.

Die Lenkung der Vorderräder 16 der Vorderachse wird mittels einer nur angedeuteten Zahnstangen-Lenkeinrichtung 24 bewirkt, die über, an einem Lenkarm 18a des Radträgers 18 angreifende Spurstangen 26 mit dem Radträger 18 verbunden ist.

Ferner ist an dem Einzellenker 14 ein schräg nach oben innen ragender Teleskop-Stoßdämpfer 28 angelenkt, der andererseits mit dem Aufbau des Kraftfahrzeuges gelenkig verbunden ist.

Die über Schwenkachsen 30 am Aufbau angelenkten Lenker 12, 14 sind über Kugelgelenke 32 am Radträger 18 angelenkt, wobei die Kugelgelenke 32 eine im Wesentlichen senkrechte Lenkachse 34 bilden. Die Spurstange 26 der Lenkeinrichtung 24 greift dabei an dem Radträger 18 über ein weiteres Kugelgelenk 36 an dem Lenkarm 18a außerhalb der besagten Lenkachse 34 an.

Wie die Fig. 2 zeigt, sind die Lenkeinrichtung 24 und die Stabilisator-FederEinrichtung 22 vor der Radaufhängung 10 bzw. der Drehachsen der Vorderräder 16 positioniert. Die rechtsseitige Radaufhängung ist spiegelbildlich gleich ausgeführt und deshalb nicht weiter dargestellt.

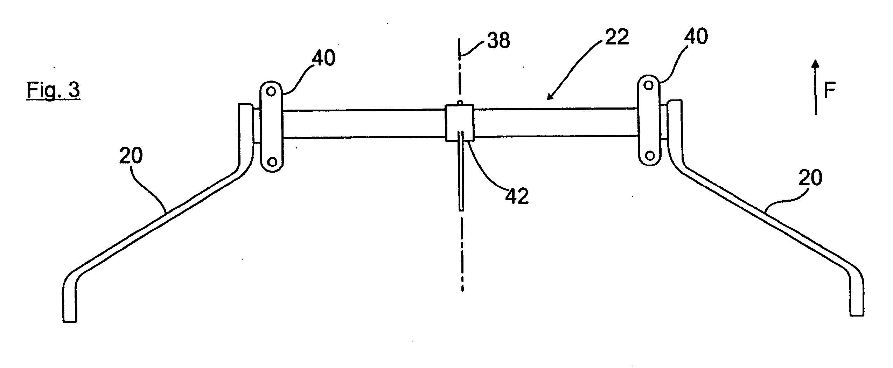

Jedoch zeigt die Fig. 3 die gesamte Stabilisator-Tragfeder-Einrichtung 22 mit den beidseitig entgegen der Fahrtrichtung F nach hinten abragenden Streben 20, den außen positionierten Lagerstellen 40 und dem in der senkrechten Fahrzeuglängsmitte 38 angeordneten Federlager 42.

Die Lagerstellen 40 und das Federlager 42 sind am Aufbau des Kraftfahrzeuges befestigt. Wie insbesondere aus der Fig. 2 ersichtlich ist, bilden die seitlichen Lagerstellen 40 mit der aufbauseitigen Anlenkung des Einzellenkers 14 die unteren Schwenkachsen 30 jeweils von Einzellenker 14 und Strebe 20.

Die über nicht weiter dargestellte Gelenkverbindungen bei 44 und in Radnähe mit den Einzellenkern 14 verbundenen Streben 20 sind blattfederartig mit von den Lagerstellen 40 an der Stabilisator-Tragfeder-Einrichtung 22 zum Einzellenker 14 abnehmender, hochkant rechteckförmiger Querschnittsfläche als Bauteile spezifisch gleicher Biegespannung ausgeführt, deren Biegesteifigkeit zudem größer als deren Verdrehsteifigkeit ist. Dadurch werden die Ein- und Ausfederbewegungen der Räder 16 exakt auf die Stabilisator-Tragfeder-Einrichtung 22 übertragen, während die Streben 20 die durch die Schwenkbewegung um die Schwenkachse 30 auftretenden Verwindungen ohne Lagerverzwängungen in sich ausgleichen.

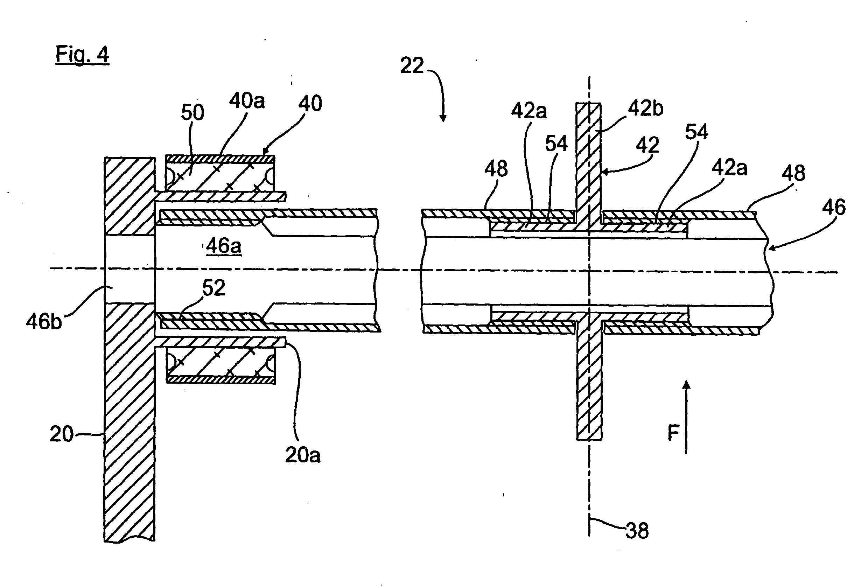

Die Fig. 4 zeigt einen Längsschnitt durch die teilweise dargestellte Stabilisator-Tragfeder-Einrichtung 22 der Vorderachse, mit einem beide Streben 20 verbindenden Stabilisator-Mittelteil 46 aus einem Vollstab aus Federstahl und zwei jeweils zwischen dem Federlager 42 und den Streben 20 eingespannten, rohrförmigen Drehstabfedern 48 aus Federstahl, die als Tragfedern für die linke und rechte Radaufhängung 10 wirken.

Die Streben 20 als solche sind mit zu dem Mittelteil 46 ragenden Nabenabschnitten 20a versehen, um die gummielastische Lagerbüchsen 50 angeordnet sind, die wiederum in schellenartigen Lageraufnahmen 40a eingespannt sind und als Lagerkonsolen jeweils die Lagerstelle 40 definieren und die Feder- und Stabilisatorkräfte in den Aufbau einleiten.

Das Stabilisator-Mittelteil 46 weist je Seite einen im Durchmesser vergrößerten Abschnitt 46a auf, der über eine Steckverzahnung 52 mit dem jeweiligen Drehstab 48 in Umfangsrichtung formschlüssig verbunden ist. Die Steckverbindung 52 liegt dabei wie ersichtlich ist innerhalb des Nabenabschnittes 20a in einer im Wesentlichen einheitlichen Kraftwirkungsebene.

Andererseits ist der Drehstab 48 über eine weitere Steckverzahnung 54 mit einer Lagerbüchse 42a in Umfangsrichtung formschlüssig verbunden, wobei die Lagerbüchsen 42a mit einer am Aufbau befestigbaren Stützkonsole 42b das Federlager 42 bilden.

Jeweils unmittelbar dem Abschnitt 46a des Stabilisator-Mittelteils 46 benachbart weist der Mittelteil 46 einen nach außen ragenden, im Durchmesser geringeren Fortsatz 46b auf, auf den die Streben 20 aufgesteckt und mittels einer Schweißverbindung 56 zum Beispiel durch Laserschweißen, befestigt sind. Der Fortsatz 46b kann gegebenenfalls unsymmetrisch (oval) ausgeführt sein, um Umfangskräfte zuverlässig auf die Drehstabfedern 48 und das Stabilisator-Mittelteil zu übertragen.

Die Stützkonsole 42b ist als aufbauseitiger Abstützhebel wirkend konsolenförmig am Aufbau befestigt (nicht dargestellt) und nimmt die über die Drehstäbe 48 als Tragfedern und die Streben 20 eingeleiteten Achslasten zuverlässig auf.

Das durch das Federlager 42 hindurch verlaufende Mittelteil 46 bildet zusammen mit den Streben 20 einen U-förmigen Stabilisator, der insbesondere Wankneigungen des Kraftfahrzeuges in bekannter Weise entgegenwirkt.

Zugleich bilden die über die beiden äußeren Lagerstellen 40 unmittelbar am Aufbau gelagerten Streben 20 in Verbindung mit dem Einzellenker 14 einen über die Schwenkachse 30 schwenkbaren Querlenker der Radaufhängungen 10.

Die in Fig. 4 nicht dargestellte, rechtsseitige Strebe 20 kann wie linksseitig mit dem Fortsatz 46b des Mittelteils 46 verschweißt oder über eine Steckverzahnung und eine Schraubverbindung lösbar ausgeführt sein.

Bei einer Radaufhängung 10 der beschriebenen Art für eine Hinterachse des Kraftfahrzeuges mit ungelenkten Rädern sind anstelle der Lenkeinrichtung 24 und den Spurstangen 26 Einzellenker definierter räumlicher Ausrichtung vorgesehen, die jeweils an dem Lenkarm 18a des Radträgers 18 einerseits und am Aufbau andererseits angelenkt sind und beim Durchfedern der Räder und beim Durchfahren von Kurven im Fahrbetrieb ein definiertes, gegebenenfalls elastokinematisches Spurverhalten der Räder steuern.

## Patentansprüche

1. Radaufhängung für eine Achse eines Kraftfahrzeuges, mit je Seite einem, ein Rad (16) drehbar aufnehmenden Radträger (18), der über obere und untere Lenker (12, 14, 20) relativ zum Aufbau geführt ist, wobei insbesondere die unteren Lenker (14, 20) jeweils durch einen im Wesentlichen quer verlaufenden Lenker (14) und eine schräg oder längs verlaufende Strebe (20) gebildet sind, und die beidseitigen Streben (20) Funktionsteile eines in der Draufsicht U-förmig ausgeführten, über Lagerstellen (40) am Aufbau abgestützten Querstabilisators (22) sind, **dadurch gekennzeichnet, dass** die Streben (20) zugleich mit je Aufhängungsseite einer koaxial zum Stabilisator-Mittelteil (46) angeordneten Drehstabfeder (48) kombiniert sind, die etwa in der Fahrzeugmitte (38) am Aufbau verdrehfest abgestützt ist.

2. Radaufhängung nach Anspruch 1, **dadurch gekennzeichnet, dass** die Drehstabfedern (48) durch Rohrfedern gebildet sind, die radial außerhalb des einstückigen Stabilisator-Mittelteils (46) angeordnet sind.

3. Radaufhängung nach den Ansprüchen 1 oder 2, **dadurch gekennzeichnet, dass** die Drehstabfedern (48) etwa in Fahrzeugmitte (38) an einem gemeinsamen Federlager (42) mit einer gemeinsamen mittleren, am Aufbau befestigbaren Stützkonsole (42b), und/oder beiderseitigen, büchsenförmigen Federaufnahmen (42a) abgestützt sind, wobei das Stabilisator-Mittelteil (46) durch das Federlager (42) hindurchgeführt ist.

4. Radaufhängung nach einem der vorhergehenden Ansprüche, **dadurch gekennzeichnet, dass** das Stabilisator-Mittelteil (46) mit den Streben (20) verdrehfest verbunden ist, und/oder dass die Streben (20) zum Mittelteil (46) ragende Nabenabschnitte (20a) aufweisen, die über gummielastische Lagerbüchsen (50) am Aufbau schwenkbar gelagert sind.

5. Radaufhängung nach einem der vorhergehenden Ansprüche, **dadurch gekennzeichnet, dass** die Drehstabfedern (48) über Steckverzahnungen (52, 54) mit dem Federlager (42) und mit außenliegenden, im Durchmesser vergrößerten Abschnitten (46a) des Stabililsator-Mittelteils (46) drehfest verbunden sind.

6. Radaufhängung nach Anspruch 5, **dadurch gekennzeichnet, dass** die Steckverzahnungen (52) zwischen den Drehstabfedern (48) und den korrespondierenden Abschnitten (46a) des Stabilisator-Mittelteils (46) innerhalb der an den Streben (20) angeordneten Nabenabschnitte (20a) bzw. deren Lagerung (50, 40a) am Aufbau positioniert sind.

7. Radaufhängung nach einem der Ansprüche 5 oder 6, **dadurch gekennzeichnet, dass** zumindest eine der Streben (20) auf einen an die Steckverzahnung (52) anschließenden Fortsatz (46b) des Stabilisator-Mittelteils (46) aufgesteckt und mit diesem stoffschlüssig verbunden ist.

8. Radaufhängung nach einem der vorhergehenden Ansprüche, **dadurch gekennzeichnet, dass** die Streben (20) mit einem Querschnittsprofil ausgeführt sind, das eine hohe Biegesteifigkeit und eine geringere Verdrehsteifigkeit aufweist.

9. Radaufhängung nach Anspruch 8, **dadurch gekennzeichnet, dass** die Streben (20) blattfederartig mit zur Lenkeranbindung (44) in Radnähe hin abnehmender Querschnittfläche gestaltet sind.

10. Radaufhängung nach einem der vorhergehenden Ansprüche, **dadurch gekennzeichnet, dass** die mit den Streben (20) zusammenwirkenden Lenker Einzellenker (14) sind, an denen zudem die TeleskopStoßdämpfer (28) der Radaufhängungen (10) angelenkt sind.

11. Radaufhängung nach einem der vorhergehenden Ansprüche, **dadurch gekennzeichnet, dass** die oberen Lenker Dreieckslenker (12) sind, deren Anlenkung (32) am Radträger (18) mit der Anlenkung (32) des unteren Einzellenkers (14) jeweils eine Lenkachse (34) bilden, und/oder dass an den Radträgern (18) Lenkarme (18a) angeordnet sind, an denen außerhalb der Lenkachse (34) ein spurführender Lenker (26) angelenkt ist.

12. Radaufhängung nach Anspruch 11, **dadurch gekennzeichnet, dass** bei einer Vorderachse (10) mit gelenkten Rädern (16) die spurführenden Lenker die Spurstangen (26) einer Lenkeinrichtung (24) des Kraftfahrzeuges sind.

## Claims

1. Wheel suspension for an axle of a motor vehicle, comprising, for each side, a wheel carrier (18) which receives a wheel (16) such that it can rotate and which is guided relative to the body via upper and lower links (12, 14, 20), in particular the lower links (14, 20) each being formed by a link (14) extending substantially transversely and a strut (20) extending obliquely or longitudinally, and the struts (20) on each side being functional parts of a stabiliser bar (22) which is U-shaped in plan view and supported via bearing points (40) on the body, **characterised in that** the struts (20) are simultaneously combined with, for each suspension side, a torsion bar spring (48) which is arranged coaxially with the stabiliser central part (46) and is supported approximately in the vehicle centre (38) in a torsion-proof manner on the body.

2. Wheel suspension according to claim 1, **characterised in that** the torsion bar springs (48) are formed by tube springs which are arranged radially outside the one-piece stabiliser central part (46).

3. Wheel suspension according to either claim 1 or claim 2, **characterised in that** the torsion bar springs (48) are supported approximately in the vehicle centre (38) on a common spring hanger (42) having a common central support bracket (42b) which can be fastened to the body, and/or bushing-shaped spring seats (42a) on each side, the stabiliser central part (46) being guided through the spring hanger (42).

4. Wheel suspension according to any of the preceding claims, **characterised in that** the stabiliser central part (46) is connected to the struts (20) in a torsion-proof manner, and/or **in that** the struts (20) comprise hub portions (20a) which project in relation to the central part (46) and which are pivotally mounted on the body via rubber-elastic bearing bushings (50).

5. Wheel suspension according to any of the preceding claims, **characterised in that** the torsion bar springs (48) are connected via splines (52, 54) to the spring hanger (42) and to outer portions (46a) of the stabiliser central part (46) which have an enlarged diameter, for conjoint rotation.

6. Wheel suspension according to claim 5, **characterised in that** the splines (52) are positioned between the torsion bar springs (48) and the corresponding portions (46a) of the stabiliser central part (46) inside the hub portions (20a) arranged on the struts (20) or the mounting (50, 40a) thereof on the body.

7. Wheel suspension according to either claim 5 or claim 6, **characterised in that** at least one of the struts (20) is fitted on an extension (46b) of the stabiliser central part (46), which extension adjoins the spline (52), and is integrally bonded thereto.

8. Wheel suspension according to any of the preceding claims, **characterised in that** the struts (20) have a cross-sectional profile which has a high flexural rigidity and a relatively low torsional rigidity.

9. Wheel suspension according to claim 8, **characterised in that** the struts (20) are leaf-spring-like and have a cross-sectional area which decreases towards the link connection (44) near the wheel.

10. Wheel suspension according to any of the preceding claims, **characterised in that** the links which interact with the struts (20) are single links (14) to which the telescopic shock absorbers (28) of the wheel suspensions (10) are additionally articulated.

11. Wheel suspension according to any of the preceding claims, **characterised in that** the upper links are wishbones (12), the articulation (32) of which to the wheel carrier (18) forms, together with the articulation (32) of the lower single link (14), a steering axis (34) in each case, and/or **in that** steering arms (18a) are arranged on the wheel carriers (18), to which steering arms a tracking link (26) is articulated outside the steering axis (34).

12. Wheel suspension according to claim 11, **characterised in that**, in the case of a front axle (10) having steered wheels (16), the tracking links are the track rods (26) of a steering device (24) of the motor vehicle.

## Revendications

1. Suspension de roue pour essieu d'un véhicule automobile, avec de chaque côté un porte-roue (18) recevant à rotation une roue (16), lequel porte-roue est guidé via des bras oscillants supérieur et inférieurs (12, 14, 20) par rapport à la carrosserie, dans laquelle en particulier les bras oscillants inférieurs (14, 20) sont formés respectivement par un bras oscillant (14) s'étendant sensiblement transversalement et une jambe de force (20) s'étendant en oblique ou longitudinalement, et les jambes de force (20) des deux côtés sont des pièces fonctionnelles d'un stabilisateur transversal (22) élaboré en forme de U en vue de dessus et supporté sur la carrosserie via des points d'appui (40), **caractérisée en ce que** les jambes de force (20) sont combinées conjointement avec, sur chaque côté de la suspension, un ressort à barre de torsion (48) aménagé coaxialement avec la partie centrale (46) du stabilisateur, lequel ressort s'appuie plus ou moins au centre (38) du véhicule sur la carrosserie en mode résistant à la torsion.

2. Suspension de roue selon la revendication 1, **caractérisée en ce que** les ressorts à barre de torsion (48) sont formés de tubes-ressorts qui sont aménagés radialement à l'extérieur de la partie centrale (46) du stabilisateur d'un seul tenant.

3. Suspension de roue selon la revendication 1 ou la revendication 2, **caractérisée en ce que** les ressorts à barre de torsion (48) s'appuient plus ou moins au centre (38) du véhicule sur un palier à ressort commun (42) avec une console d'appui centrale commune (42b) qui peut être fixée sur la carrosserie et/ou avec des logements de ressorts (42a) en forme de douilles disposés des deux côtés, dans lequel la partie centrale (46) du stabilisateur est traversée par le palier à ressort (42).

4. Suspension de roue selon l'une quelconque des revendications précédentes, **caractérisée en ce que** la partie centrale (46) du stabilisateur est raccordée aux jambes de force (20) en mode résistant à la torsion et/ou les jambes de force (20) présentent des sections de moyeu (20a) qui font saillie vers la partie centrale (46), lesquelles sections sont montées à pivotement sur la carrosserie via des coussinets (50) élastiques comme le caoutchouc.

5. Suspension de roue selon l'une quelconque des revendications précédentes, **caractérisée en ce que** les ressorts à barre de torsion (48) sont raccordés solidaires en torsion, via des dentures d'emboîtement (52, 54), au palier à ressort (42) et à des sections externes (46a) de plus grand diamètre de la partie centrale (46) du stabilisateur.

6. Suspension de roue selon la revendication 5, **caractérisée en ce que** les dentures d'emboîtement (52) entre les ressorts à barre de torsion (48) et les sections correspondante (46a) de la partie centrale (46) du stabilisateur sont positionnées sur la carrosserie à l'intérieur des sections de moyeu (20a) agencées sur les jambes de force (20) ou de leur logement (50, 40a).

7. Suspension de roue selon l'une quelconque des revendications 5 ou 6, **caractérisée en ce qu'**au moins une des jambes de force (20) est enfichée sur un prolongement (46b) de la partie centrale (46) du stabilisateur se raccordant à la denture d'emboîtement (52) et est matériellement raccordée à celui-ci.

8. Suspension de roue selon l'une quelconque des revendications précédentes, **caractérisée en ce que** les jambes de force (20) se présentent avec un profil en section transversale qui possède une rigidité à la flexion élevée et une rigidité à la torsion moindre.

9. Suspension de roue selon la revendication 8, **caractérisée en ce que** les jambes de force (20) sont conformées en ressort à lames avec une surface en coupe transversale décroissant vers la liaison (44) du bras oscillant au voisinage de la roue.

10. Suspension de roue selon l'une quelconque des revendications précédentes, **caractérisée en ce que** les bras oscillants coopérant avec les jambes de force sont des bras oscillants individuels (14) sur lesquels sont en outre articulés les amortisseurs télescopiques (28) des suspensions de roues (10).

11. Suspension de roue selon l'une quelconque des revendications précédentes, **caractérisée en ce que** les bras oscillants supérieurs sont des bras oscillants triangulaires (12), dont l'articulation (32) sur le porte-roue (18) forme avec l'articulation (32) du bras oscillant inférieur individuel (14) respectivement un essieu directeur (34) et/ou il est agencé sur les porte-roues (18) des bras directeurs (18a) sur lesquels est articulé un bras oscillant d'alignement (26) à l'extérieur de l'essieu directeur (34).

12. Suspension de roue selon la revendication 11, **caractérisée en ce que**, dans un essieu avant (10) avec des roues dirigées (16), les bras oscillants d'alignement sont les barres d'accouplement (26) d'un dispositif directeur (24) du véhicule automobile.
